(19) **Europäisches Patentamt European Patent Office Office européen des brevets**

(11) **EP 3 411 728 B1**

(12) **FASCICULE DE BREVET EUROPEEN**

(45) Date de publication et mention de la délivrance du brevet:
**11.11.2020 Bulletin 2020/46**

(51) Int Cl.:
**G01S 7/38** (2006.01)    **G01S 7/02** (2006.01)

(21) Numéro de dépôt: **17701724.1**

(22) Date de dépôt: **30.01.2017**

(86) Numéro de dépôt international:
**PCT/EP2017/051896**

(87) Numéro de publication internationale:
**WO 2017/133998 (10.08.2017 Gazette 2017/32)**

(54) **PROCÉDÉ DE BROUILLAGE DE RADARS DU TYPE A OUVERTURE SYNTHÉTIQUE ET DISPOSITIF ASSOCIÉ**

VERFAHREN ZUM STÖREN VON RADAREN MIT SYNTHETISCHER APERTUR UND ZUGEHÖRIGE VORRICHTUNG

METHOD FOR JAMMING SYNTHETIC APERTURE RADARS AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.02.2016 FR 1600196**

(43) Date de publication de la demande:
**12.12.2018 Bulletin 2018/50**

(73) Titulaire: **Thales**
**92400 Courbevoie (FR)**

(72) Inventeurs:
• **CORNIC, Pascal**
**29820 Guilers (FR)**
• **QUELLEC, Jean-Michel**
**29810 Ploumoguer (FR)**
• **LEGROS, Patrick**
**29238 Brest (FR)**

(74) Mandataire: **Marks & Clerk France**
**Immeuble "Visium"**
**22, avenue Aristide Briand**
**94117 Arcueil Cedex (FR)**

(56) Documents cités:
**CN-B- 103 760 532**

• **BO ZHAO ET AL: "Deception Jamming for Squint SAR Based on Multiple Receivers", IEEE JOURNAL OF SELECTED TOPICS IN APPLIED EARTH OBSERVATIONS AND REMOTE SENSING, vol. 8, no. 8, 1 août 2015 (2015-08-01), pages 3988-3998, XP055312960, USA ISSN: 1939-1404, DOI: 10.1109/JSTARS.2014.2322612**
• **QINGFU LIU ET AL: "AN EFFICIENT SAR JAMMER WITH DIRECT RADIO FREQUENCY PROCESSING (DRFP)", PROGRESS IN ELECTROMAGNETICS RESEARCH, vol. 137, 1 janvier 2013 (2013-01-01), pages 293-309, XP055312912, DOI: 10.2528/PIER12092404**
• **FENG ZHOU ET AL: "A Large Scene Deceptive Jamming Method for Space-Borne SAR", IEEE TRANSACTIONS ON GEOSCIENCE AND REMOTE SENSING, IEEE SERVICE CENTER, PISCATAWAY, NJ, US, vol. 51, no. 8, 1 août 2013 (2013-08-01), pages 4486-4495, XP011521744, ISSN: 0196-2892, DOI: 10.1109/TGRS.2013.2259178**

EP 3 411 728 B1

**Description**

La présente invention concerne le domaine de la protection de site sensible, civil ou militaire. L'invention concerne plus particulièrement un dispositif et un procédé de brouillage de radars du type à ouverture synthétique.

Compte tenu du temps d'intégration très long des radars à ouverture synthétique (ou SAR pour "*Synthetic Aperture Radar*" selon la terminologie anglo-saxonne), typiquement de plusieurs dizaines de secondes, ces radars disposent d'un gain de compression très élevé, ce qui leur permet de détecter des cibles à très grande distance typiquement des distances supérieures à 100 km, et ceci avec un rapport signal à bruit élevé. La puissance nécessaire pour neutraliser ce type de menace par des moyens de brouillage conventionnels est par conséquent très importante, ce qui rend très difficile la réalisation de brouilleurs efficaces.

Un moyen de brouillage connu de l'art antérieur consiste à émettre du bruit, une onde entretenue (ou CW pour "*Continuous Wave*" selon la terminologie anglo-saxonne) ou une onde entretenue balayée dans la bande de réception du radar SAR à brouiller, afin de masquer une zone que l'on souhaite protéger d'une observation. Ce type de brouillage nécessite une très forte puissance du fait du gain de compression d'un tel radar correspondant à plusieurs dizaines de décibels et du fait qu'en général, la surface à protéger est importante, typiquement de l'ordre de plusieurs km$^2$. Le brouillage est dans ce cas non cohérent.

Un autre moyen de brouillage consiste à réémettre un signal retardé (avec un décalage fréquentiel et/ou un décalage de phase) répétant le signal émis par le radar SAR à chaque récurrence, de façon cohérente, par exemple à l'aide d'un système à mémoire de fréquence radio numérique (ou DRFM pour "*Digital Radio Frequency Memory*" selon la terminologie anglo-saxonne), et une série de répliques identiques à ce signal, réparties dans une certaine bande de fréquence, de façon à couvrir la bande Doppler d'analyse du radar SAR à brouiller. Là encore, la puissance de brouillage à générer est très importante, car même si le signal de brouillage est comprimé par le radar SAR sur l'axe distance radiale, il ne l'est pas sur l'axe distance transverse. Par ailleurs, la bande Doppler couverte par le radar SAR étant inconnue, il faut assurer une forte puissance de brouillage sur une bande de fréquence supérieure à la bande SAR. Le brouillage est alors cohérent en distance mais non cohérent en Doppler.

Il est également connu dans l'art antérieur, un moyen de brouillage consistant à réémettre un signal répétant le signal émis par le radar SAR à chaque récurrence, de façon cohérente, par exemple à l'aide d'une DRFM et une série de répliques identiques à ce signal, réparties dans la bande du radar SAR, cohérentes de récurrence à récurrence, ces répliques reproduisant l'historique de phase de chaque pixel de l'image SAR en fonction de sa position géographique. Le brouillage est alors cohérent sur l'axe distance et sur l'axe Doppler. Cette technique est de nature à limiter fortement la puissance de brouillage à émettre, mais nécessite la connaissance à chaque instant de la position du radar SAR vis-à-vis de l'ensemble des points de la surface à protéger. Cette connaissance n'est a priori jamais disponible, sauf dans le cas particulier de satellites d'observation dont les orbites se répètent régulièrement. Par ailleurs, le volume de calcul nécessaire pour définir et générer l'ensemble des répliques en temps réel rend cette solution irréalisable en pratique.

L'article publié par Bo Zhao et Al dans la revue IEEE JOURNAL OF SELECTED TOPICS IN APPLIED EARTH OBSERVATIONS AND REMOTE SENSING, VOL. 8, NO.8. AUGUST 2015, sous le titre "*Deception Jamming for Squint SAR Based on Multiple Receivers*", décrit une méthode de brouillage déceptif pour radar à ouverture synthétique (SAR), basée sur l'emploi de plusieurs récepteurs et exploitant les différences entre les mesures de distance réalisées par les différents récepteurs. Selon les auteurs, cette méthode considère les paramètres de fonctionnement du radar SAR hostile dans leur ensemble, de façon à réaliser un brouillage plus efficace, prenant notamment en compte l'angle de strabisme.

Le document de brevet chinois portant la référence CN 103760532 B et délivré le 03:02:2016 décrit un procédé de génération de brouillage déceptif d'imageur (radar) SAR mettant en œuvre des brouilleurs et des récepteurs formant un réseau destiné à capturer les signaux émis par l'imageur et à traiter les signaux reçus pour réaliser un signal de brouillage destiné à venir se superposer au signal réel reçu par l'imageur (radar).

Un but de l'invention est notamment de corriger tout ou partie des inconvénients de l'art antérieur en proposant une solution permettant de brouiller de façon cohérente un radar SAR tentant d'imager une zone à protéger et ne mettant en œuvre qu'une puissance d'émission modeste.

A cet effet, l'invention a pour objet un procédé de brouillage d'au moins un radar aéroporté de type SAR mis en œuvre par un dispositif de brouillage de radars comprenant un groupe d'au moins deux équipements coopératifs entourant une surface au sol à protéger, au moins deux équipements dudit groupe assurant une fonction de détecteur de radars et au moins un équipement dudit groupe assurant une fonction de brouilleur de radars, chaque équipement assurant la fonction de détecteur de radars comprenant un module de réception et de traitement configuré pour analyser les signaux reçus, chaque équipement assurant la fonction de brouilleur de radars étant configuré pour générer et émettre des signaux de brouillage, chaque équipement étant relié entre eux par au moins une liaison de donnée bidirectionnelle et étant synchronisé par une horloge commune, ledit procédé comprenant une étape d'identification des signaux reçus par les récepteurs et si lesdits signaux reçus correspondent à des signaux d'un radar à ouverture synthétique :

- une étape de caractérisation du signal SAR reçu sur une durée prédéterminée inférieure à la durée d'une récurrence du signal SAR,

- une étape de calcul d'un filtre adapté au signal SAR reçu,

- une étape de compression d'impulsion du signal SAR reçu à chaque récurrence à l'aide dudit filtre adapté, ladite étape permettant d'obtenir la phase dans les cases distance, ce qui permet d'obtenir l'historique Doppler lié au déplacement du porteur du radar,

- une étape de caractérisation périodique itérative du signal reçu sur une durée prédéterminée supérieure à une récurrence du signal SAR de façon à établir, de récurrence en récurrence, la vitesse de déplacement du radar et la distance entre ledit radar et la surface à protéger,

- une étape de calcul des signaux de brouillage à émettre pour chaque point de la surface à protéger afin de brouiller le radar SAR de façon cohérente sur l'axe distance et sur l'axe Doppler.

- une étape d'émission des signaux de brouillage calculés.

Selon un mode de mise en œuvre, le procédé comprend une étape de fenêtrage temporel et fréquentiel de façon à limiter le volume de détection du module de traitement à une fenêtre temporelle et à une bande passante correspondant aux caractéristiques observées sur le signal SAR.
Selon un mode de mise en œuvre, l'identification d'un signal SAR est obtenue à partir de critères prédéterminés relatifs à sa forme d'onde et à l'orientation du faisceau d'antenne du radar SAR.
Selon un mode de mise en œuvre, au moins un équipement assurant la fonction de brouilleur de radars comprend une table mémoire dans laquelle sont préenregistrées différents signaux de brouillage et dans lequel les signaux de brouillage à émettre ne sont pas calculés mais chargés à partir de la zone mémoire.
Selon un mode de mise en œuvre, la surface à protéger est modifiable.
L'invention a également pour objet un dispositif de brouillage de radars aéroporté de type SAR configuré pour mettre en œuvre le procédé de brouillage précédemment décrit, ledit dispositif comprenant un groupe d'au moins deux équipements coopératifs entourant une surface au sol à protéger, au moins deux équipements dudit groupe assurant une fonction de détecteur de radars et au moins un équipement dudit groupe assurant une fonction de brouilleur de radars, chaque équipement assurant la fonction de détecteur de radars comprenant un module de réception et de traitement configuré pour analyser les signaux reçus, chaque équipement assurant la fonction de brouilleur de radars étant configuré pour générer et émettre des signaux de brouillage, chaque équipement étant relié entre eux par une liaison de donnée bidirectionnelle et étant synchronisé par une horloge commune.
Selon un mode de réalisation, chaque équipement assure la fonction de brouilleur de radars.
Selon un mode de réalisation, le module d'émission de chaque équipement assurant la fonction de brouilleur de radars comprend une antenne mobile configurée pour rester pointée dans la direction du radar SAR à brouiller.
Selon un mode de réalisation, le module de réception des équipements assurant la fonction de détecteur de radars comprend un récepteur du type superhétérodyne.
Selon un mode de réalisation, chaque équipement assurant la fonction de détecteur de radars comprend une antenne d'interférométrie.
Selon un mode de réalisation, au moins un détecteur de radars comprend une table mémoire dans laquelle sont préenregistrés différents signaux de brouillage.
Selon un mode de réalisation, l'horloge de synchronisation est une horloge GPS.
Selon un mode de réalisation, au moins une liaison de données est une liaison de données sécurisée.
Selon un mode de réalisation, au moins un élément du groupe d'au moins deux équipements est mobile.
D'autres particularités et avantages de la présente invention apparaîtront plus clairement à la lecture de la description ci-après, donnée à titre illustratif et non limitatif, et faite en référence aux dessins annexés, sur lesquels :

- Les figures 1a et 1b, représentent un exemple de mode de réalisation d'un dispositif de brouillage de radars selon l'invention ;

- La figure 2 représente un exemple de diagramme de rayonnement d'une antenne de radar SAR ;

- La figure 3 représente des étapes possibles du procédé de brouillage selon l'invention ;

- La figure 4 représente des exemples de fenêtre d'écoute temporelle et fréquentielle par rapport au signal radar ;

- La figure 5 illustre l'équation SAR ;

- La figure 6 représente un exemple de mode de mise en œuvre de l'invention.

L'invention a pour but d'empêcher l'observation correcte d'un site donné par un radar aéroporté du type à ouverture synthétique (ou SAR pour «*Synthetic Aperture Radar*» selon la terminologie anglo-saxonne). Cela peut se traduire par un masquage de la zone à protéger de façon à empêcher de voir sur l'image radar ce qui peut caractériser ladite zone ou par l'émission de faux échos afin de créer de fausses cibles dans l'image radar.

A cet effet, l'invention propose un procédé de brouillage de radars à synthèse d'ouverture configuré pour émettre une forme d'onde cohérente en distance et en Doppler pendant le temps d'intégration du radar à synthèse d'ouverture. Pour cela, l'invention se base sur un apprentissage de la forme d'onde du radar à brouiller, de l'apprentissage de son angle d'observation au cours du temps et de la prédiction de la trajectoire de son porteur par des moyens de détection des signaux radar afin de prédire l'historique de phase que va avoir le radar vis-à-vis de chaque point de la zone à masquer.

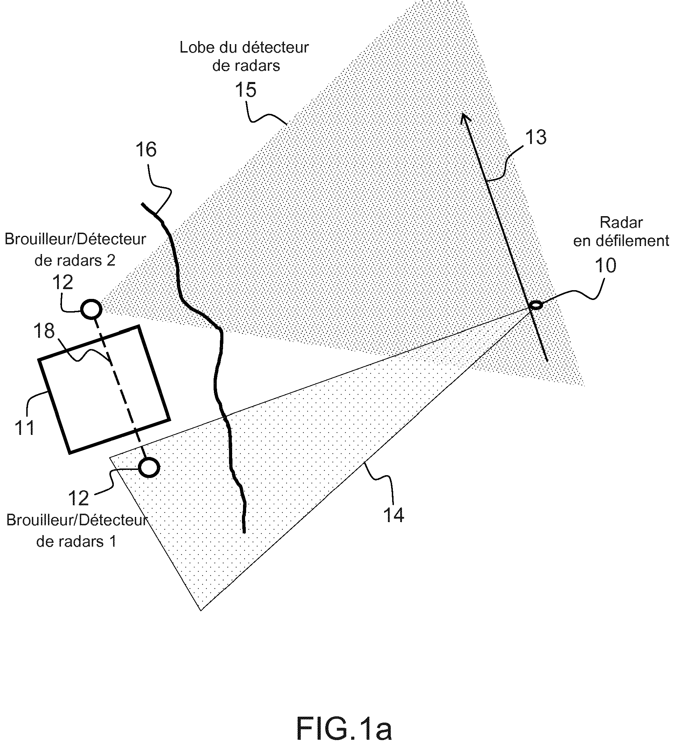

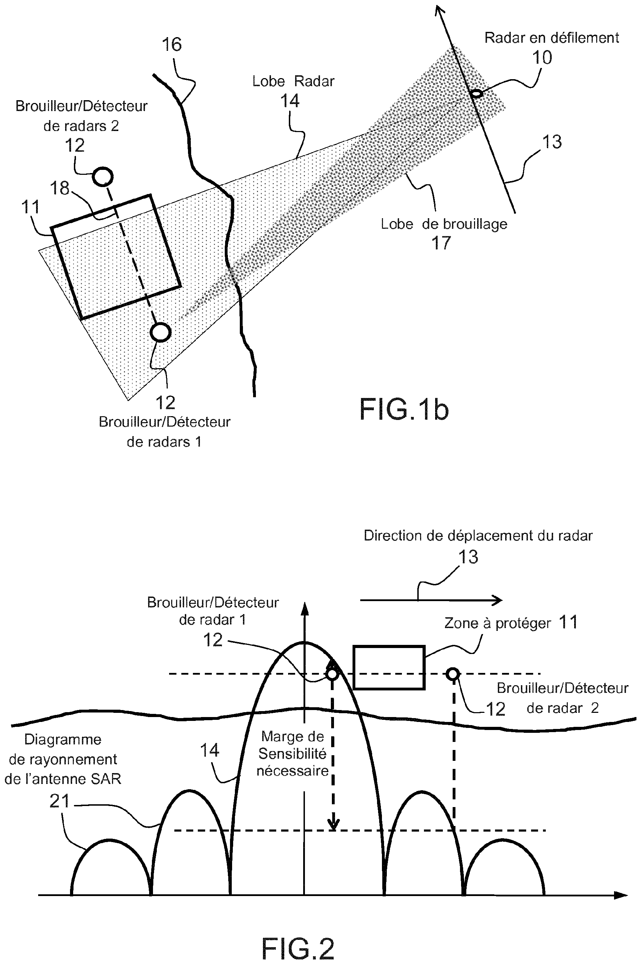

Les figures 1a et 1b, représentent un exemple de mode de réalisation d'un dispositif de brouillage de radars 10 aéroporté du type à ouverture synthétique afin de protéger une surface 11 au sol correspondant à une zone à protéger. Cette zone à protéger peut correspondre, par exemple, à un site sensible, civil ou militaire. Cette surface 11 à protéger peut être de dimensions fixes ou variables. Dans ce dernier cas, la surface 11 à protéger est modifiée au cours d'une même séquence de brouillage, en modifiant les paramètres des différentes répliques.

Le dispositif de brouillage comprend au moins deux équipements 12 coopératifs placés de part et d'autre de la surface 11 à protéger, de façon à l'encadrer. La position des équipements 12 peut être choisie en tenant compte des trajectoires 13 d'approche possibles d'un porteur pour réaliser l'imagerie SAR de cette zone à protéger. Par exemple, l'imagerie SAR d'une zone le long d'une côte ou proche d'une frontière 16 est généralement obtenue par défilement à longue distance sur une trajectoire 13 sensiblement parallèle à cette côte ou à cette frontière 16. Ainsi, si la surface 11 à protéger est située le long d'une côte ou proche d'une frontière 16, les équipements 12 peuvent être placés de part et d'autre de la zone à protéger de sorte qu'ils soient alignés selon une droite sensiblement parallèle à la côte ou la frontière donc sensiblement parallèle à la trajectoire 13 potentielle d'une plate-forme aéroportée équipée d'un radar SAR tentant d'imager la surface 11 à protéger.

Suivant un mode de réalisation, au moins un équipement 12 peut être installé sur des moyens mobiles comme par exemple un véhicule, pour pouvoir être déplacé selon les besoins et la surface à protéger.

Au moins deux équipements 12 du dispositif de brouillage assurent une fonction de détecteur de radars à haute sensibilité et au moins un équipement 12 du dispositif de brouillage assure une fonction de brouilleur de radars. De façon préférentielle, chaque équipement 12 du dispositif de brouillage assure la fonction de détecteur de radars et celle de brouilleur de radars. Ces équipements 12 sont reliés entre eux par une ou plusieurs liaisons de données 18 bidirectionnelles afin de permettre l'échange de données entre ces différents équipements 12. Au moins une liaison de données 18 peut être une liaison sécurisée et de façon préférentielle, toutes les liaisons sont des liaisons de données sécurisées. Les différents équipements 12 sont synchronisés entre eux, par exemple, par une horloge GPS ou tout type de moyen d'horloge équivalent.

Chaque équipement assurant la fonction de détecteur de radars est équipé d'un module de réception et de traitement lui permettant de détecter la présence d'un radar à ouverture synthétique, d'estimer la direction d'arrivée des émissions radar, idéalement selon deux dimensions (gisement et site), d'identifier les caractéristiques du signal SAR sur le temps court, c'est-à-dire à l'échelle de la récurrence, et sur le temps long, c'est-à-dire sur une suite de récurrences. Les équipements 12 assurant la fonction de détecteur de radars peuvent être munis d'un dispositif antennaire à large couverture en gisement, typiquement de l'ordre de 90°, et orientable, par exemple, mécaniquement.

Le dispositif de brouillage est configuré pour détecter et identifier les caractéristiques d'un signal SAR et pour brouiller de façon cohérente le radar 10 tentant d'imager la zone à protéger avant que celui-ci ne soit en visibilité de la surface 11 à protéger, puis pendant tout le temps où le radar éclaire cette surface 11 à protéger. Pour cela, la détection est réalisée conjointement par des équipements 12 assurant la fonction de détecteur de radars à haute sensibilité, par exemple de type superhétérodyne, centrés dans la bande de fréquences utilisée par les radars SAR aéroportés, typiquement la bande X. On rappelle que la bande X est une plage de fréquences d'onde radio située aux alentours de 10 GHz. La fonction de détecteur de radars peut, par exemple, être assurée par un récepteur de 500 MHz de bande instantanée, capable de balayer une bande de fréquences entre environ 8,5 GHz et environ 10,5 GHz. Les équipements 12 assurant la fonction de détecteur de radars sont dotés de moyens d'estimation des dates d'arrivée des impulsions radar (ou TOA pour "*Time Of Arrival*" selon la terminologie anglo-saxonne) et d'estimation des directions d'arrivée (ou DOA pour "*Direction Of Arrivai*" selon la terminologie anglo-saxonne) obtenue typiquement par interférométrie et possédant une large couverture en gisement.

Les équipements 12 assurant la fonction de détecteur de radars comprennent au moins un module de traitement configuré pour analyser la forme d'onde des émissions radar interceptées par les modules de réception de façon à identifier avec une grande précision les paramètres intra-impulsion du signal SAR émis par le radar 10 à chaque récurrence. Ce signal est généralement un signal modulé linéairement en fréquence, appelé plus communément par sa terminologie anglo-saxonne "*chirp".* Comme énoncé précédemment, les fonctions de détecteur de radars sont dotés de moyens de synchronisation et de communication leur permettant la fusion de leurs informations de détection en vue d'estimer, par exemple, la distance d'apparition du radar 10 SAR à partir d'au moins deux estimations d'angle d'arrivée et de temps d'arrivée des impulsions, provenant d'au moins deux détecteurs de radars différents encadrant la surface 11 à protéger. De même, la position, l'angle de visée et la vitesse de déplacement du radar peuvent être estimés à partir des informations combinées de deux équipements 12 assurant la fonction de détecteur de radars qui encadrent la surface à protéger.

Le ou les équipements 12 assurant la fonction de brouilleur de radars peuvent comprendre des moyens d'enregistrement et d'analyse intra-impulsion et d'au moins une mémoire numérique de fréquence (ou DRFM pour "*Digital Radio Frequency Memory"* selon la terminologie anglo-saxonne) leur permettant de reproduire le signal reçu du radar en le retardant et en le déphasant de récurrence à récurrence conformément à l'ensemble des historiques de temps et de phase relatifs à l'ensemble des pixels constituant l'image SAR correspondante.

Suivant un mode de mise en œuvre, l'analyse intra-impulsion peut être effectuée par le ou les équipements 12 assurant la fonction de détecteur de radars dont le lobe 15 du dispositif antennaire reçoit les émissions du radar 10 SAR de plus forte puissance lors de son apparition, c'est-à-dire celui qui est éclairé en premier par un lobe du radar, selon le sens d'arrivée de celui-ci.

De façon préférentielle, la détection et l'analyse de la forme d'onde du radar 10 SAR tentant d'illuminer la zone à protéger est effectuée dans un lobe secondaire du radar 10. Pour cela, le ou les modules de traitement des équipements 12 assurant la fonction de détecteur de radars disposent d'une marge de sensibilité suffisante pour qu'ils puissent détecter un radar 10 à synthèse d'ouverture même lorsqu'il éclaire le dispositif antennaire dudit équipement 12 sur un lobe secondaire 21. Ceci permet d'anticiper et de mettre en œuvre le brouillage avant que la zone à masquer ne soit éclairée par le lobe principal 14 de l'antenne du radar 10, comme illustré sur la figure 1a, et pendant toute la durée d'illumination de la surface 11 à protéger par le lobe principal 14.

Les équipements 12 assurant la fonction de détecteurs de radars doivent posséder une bande d'analyse instantanée suffisante pour pouvoir mesurer les modulations intra-impulsion. Cela nécessite un rapport signal à bruit suffisant et un gain d'antenne suffisant. De façon avantageuse, un récepteur superhétérodyne permet ce type de traitement en réduisant la bande d'analyse instantanée au besoin et en procurant une bonne réjection des signaux hors bande.

Les équipements 12 assurant la fonction de détecteur de radars peuvent être choisis de sorte que leur sensibilité de détection soit suffisante pour pouvoir détecter un radar à synthèse d'ouverture sur un lobe secondaire 21 de son antenne. A titre illustratif, la figure 2 représente un exemple de diagramme de rayonnement de l'antenne d'un radar à synthèse d'ouverture. Sachant que le premier lobe secondaire 21 se trouve généralement à un niveau inférieur de 20 à 25 dB par rapport au lobe principal 14, la sensibilité peut être choisie par exemple supérieure de 25 dB à la sensibilité minimum nécessaire pour détecter le lobe principal de l'antenne d'un radar SAR. Ce niveau de sensibilité peut être obtenu avec des techniques connues de l'homme de l'art, par exemple en utilisant des récepteurs superhétérodynes avec analyse spectrale.

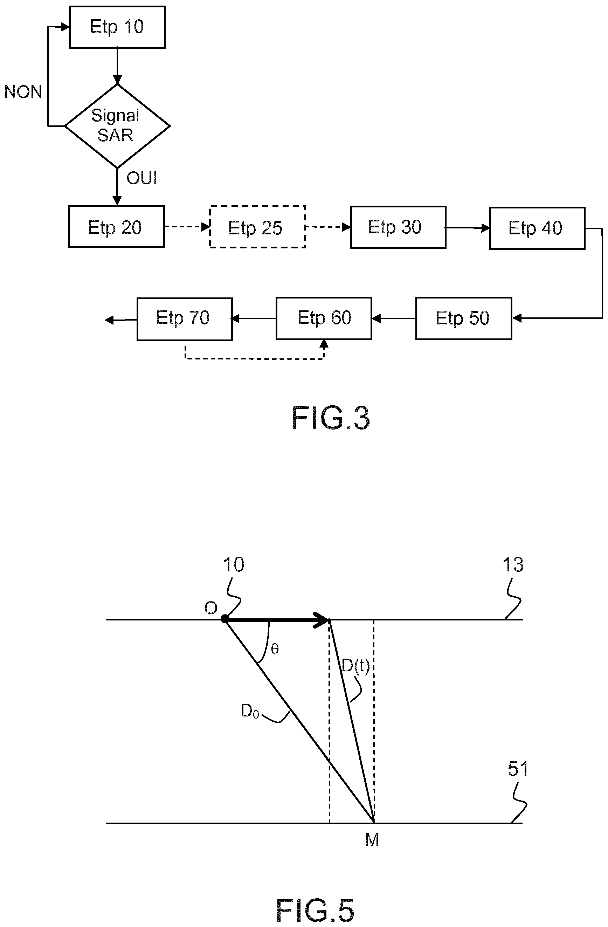

La figure 3 illustre des étapes possibles du procédé de brouillage selon l'invention.

Au cours d'une étape Etp10, les signaux reçus par les dispositifs antennaires des modules de réception des équipements 12 assurant la fonction de détecteur de radars sont analysés de façon à les identifier et détecter la présence de signaux radar. Cette détection et l'identification de la présence d'un radar 10 SAR sont effectuées à partir de critères prédéterminés relatifs à la forme d'onde du signal SAR et à la loi d'éclairement du radar 10. Ces critères correspondent à ce que produit typiquement un radar 10 à ouverture synthétique. Par exemple, une alerte de présence d'un tel radar pourra être générée si les critères suivants sont réunis :

- Présence d'un signal pulsé dans la bande de recherche du module de traitement de l'équipement 12 assurant la fonction de détecteur de radars ;

- Présence d'un signal présentant une période de récurrence constante ou une modulation périodique de la période de récurrence ;

- Présence d'un signal présentant une fréquence constante d'impulsion à impulsion, ou une modulation périodique de fréquence d'impulsion à impulsion ;

- Présence d'un signal présentant une durée d'impulsion constante d'impulsion à impulsion ;

- Présence d'un signal présentant une largeur de bande intra-impulsion importante, typiquement supérieure à 50 MHz ;

- Présence d'un signal correspondant à un radar pointé, c'est-à-dire sans modulation d'amplitude du signal reçu liée à la rotation de l'antenne radar ;

- Présence d'un signal présentant soit une phase constante d'impulsion à impulsion (cas le plus courant), soit une modulation périodique de la phase d'impulsion à impulsion (technique possible de contre-contre-mesure électronique ou de traitement des ambiguïtés distance) (Dans ce dernier cas, la loi de modulation volontaire de la phase sera caractérisée à partir du signal reçu, en séparant les modulations rapides liées à la modulation volontaire, des modulations lentes liées à l'effet SAR.)

La vérification de la présence de tous ces paramètres a pour but d'éviter d'activer un brouilleur sur une fausse alarme.

Suivant un mode de mise en œuvre de l'invention, les équipements 12 assurant la fonction de détecteur de radars peuvent également détecter la présence d'un signal présentant une modulation intra-impulsion identique d'impulsion à impulsion (cas le plus courant) ou une modulation périodique de la modulation-impulsion d'impulsion à impulsion (technique possible de contre-contre-mesure électronique ou de traitement des ambiguïtés distance).

Lorsque la présence d'un radar SAR a été détectée, le module de traitement des équipements 12 assurant la fonction de détecteur de radars détermine, au cours d'une étape Etp20, les caractéristiques du signal émis par le radar à synthèse d'ouverture sur le temps court. Le temps court fait ici référence à un temps inférieur à la durée d'une récurrence radar. L'analyse du signal SAR est effectuée sur un cycle d'une durée prédéterminée inférieure à la durée d'une récurrence du signal SAR permettant d'identifier précisément la forme d'onde émise par le radar 10 à l'intérieur de chaque récurrence, et permettant de la prédire de récurrence à récurrence, si cette forme d'onde n'est pas constante. Typiquement, la durée d'analyse est de l'ordre de plusieurs dizaines de millisecondes à une centaine de millisecondes. Cette analyse permet d'identifier en particulier, la fréquence d'émission ou fréquence porteuse, la durée d'impulsion, la durée de la récurrence, la modulation intra-impulsion et la bande de modulation $\Delta F$ correspondante, la phase de début d'impulsion d'émission et la direction d'arrivée du signal radar.

La bande de modulation $\Delta F$ du radar permet d'estimer la résolution distance radiale du radar SAR, c'est-à-dire la taille d'un pixel élémentaire sur l'image radar. Cette résolution est donnée par la formule :

$$\Delta R_d = \frac{c}{2\Delta F}$$

dans laquelle : $\Delta R_d$ représente la résolution distance radiale du radar,

c représente la vitesse de propagation des ondes,

$\Delta F$ représente la bande de modulation

De façon classique, la résolution transversale $\Delta R_a$ est prise égale à la résolution radiale $\Delta R_d$.

Suivant un mode de mise en œuvre, le procédé de brouillage peut comprendre une étape Etp25 de fenêtrage temporel et fréquentiel de façon à limiter le volume de détection du module de traitement à une fenêtre d'écoute temporelle et à une bande passante correspondant aux caractéristiques observées sur le signal SAR. Pour ce faire, les informations sur le signal SAR peuvent être utilisées par exemple par les modules de traitement de la fonction détection de radars, pour synchroniser la fenêtre d'écoute du récepteur de chaque équipement 12 assurant la fonction de détecteur de radars sur l'impulsion émise par le radar 10 à chaque récurrence. Cela permet de simplifier le traitement et de ne pas perturber les récepteurs avec des signaux autres que ceux émis par le radar. De même, les caractéristiques du signal SAR estimées sur le temps court peuvent être utilisées pour choisir la bande de réception la mieux adaptée à ce signal.

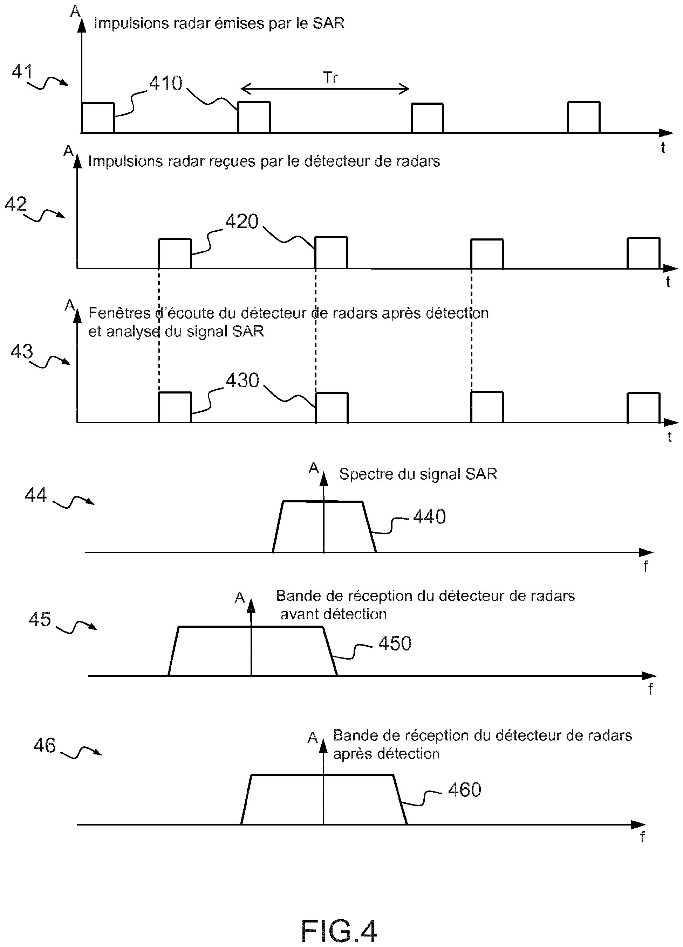

A titre illustratif, la figure 4 permet de comparer des exemples de fenêtres d'écoutes temporelle et fréquentielle avec l'évolution temporelle et le spectre du signal correspondant émis par le radar et reçu par un détecteur de radars. Les graphiques 41 et 42 représentent respectivement les amplitudes des impulsions 410 du signal émis par le radar et celles 420 du signal reçu par un détecteur de radars. Le graphique 43 représente les fenêtres d'écoutes temporelles 430 du récepteur du détecteur de radars. Ces fenêtres d'écoutes sont périodiques et synchronisées avec le signal reçu par le récepteur. La fenêtre temporelle 430 est synchronisée avec l'impulsion 420 reçue du radar suite à la réception préalable de plusieurs impulsions 420 successives.

Le graphique 44 représente l'amplitude du spectre du signal SAR émis par le radar. Les graphiques 45 et 46 représentent respectivement les bandes de réception 450, 460 du détecteur de radars avant et après détection. Après détection, la bande de réception ou fenêtre d'écoute fréquentielle 460 du détecteur de radar est accordée sur la seule bande de fréquences du signal SAR.

A partir des caractéristiques de la forme d'onde observée, une étape Etp30 est implémentée pendant laquelle les modules de traitement des équipements 12 assurant la fonction de détecteur de radars calculent un corrélateur adapté au signal SAR détecté, c'est-à-dire un filtre adapté à l'impulsion radar permettant de comprimer l'impulsion reçue au niveau du détecteur de radars.

Ce corrélateur temps court est ensuite utilisé, pendant une étape Etp40, pour comprimer l'impulsion reçue au niveau du dispositif antennaire de la fonction détecteur de radars à chaque récurrence radar. La compression d'impulsion est ici utilisée pour améliorer le rapport signal à bruit du signal reçu. La détection des impulsions comprimées permet d'obtenir la phase dans les cases distance $\Delta R_d$ et par là d'apprendre, sur le temps long, l'historique Doppler lié au déplacement du porteur du radar par rapport à l'équipement 12 assurant la fonction de détecteur de radars et d'extraire la phase Doppler $\varphi_{dr}(t)$ et son historique. Cette impulsion comprimée va permettre d'implémenter une étape Etp50 de caractérisation périodique itérative du signal reçu sur le temps long c'est-à-dire sur une durée supérieure à la durée d'une récurrence du signal SAR de façon à établir, de récurrence en récurrence, la vitesse de déplacement du radar et la distance entre ledit radar et la surface à protéger.

Une fois la forme d'onde du radar analysée, au moins un module de génération de brouillage estime la forme d'onde des signaux de brouillage à émettre par le module d'émission de brouillage au cours d'une étape Etp60.

En référence à la figure 5, on considère un radar 10 SAR situé en un point O à t=0 et un point M au sol 51 situé au temps t=0 à une distance $D_0$ et à un angle $\theta$ par rapport à l'axe de déplacement 13 du porteur du radar SAR se déplaçant à une vitesse V. Si on considère l'équation SAR classique définissant l'historique distance D(t) entre le radar 10 SAR et le point M au sol 51 on a la relation :

$$D(t) = D_0 \sqrt{1 - \frac{2V.t.cos(\Theta)}{D_0} + \frac{V^2.t^2}{D_0{}^2}}$$

A l'aide d'un développement limité à l'ordre 2 en (*V.t*), on peut extraire:

$$D(t) = D_0 - V.t.cos(\Theta) + \frac{V^2.t^2}{2D_0} sin^2(\Theta) \qquad (1)$$

et par suite, la phase aller-retour $\varphi_r(t)$ à chaque récurrence radar :

$$\varphi_r(t) = 4\pi \frac{D_0}{\lambda} - 4\pi \frac{V}{\lambda} cos(\Theta)t + 4\pi \frac{V^2}{2\lambda D_0} sin^2(\Theta)\, t^2 \qquad (2)$$

La fréquence Doppler $Fd_r$ pour la direction $\theta$, vue du radar SAR est :

$$Fd_r(t) = \frac{2V}{\lambda} cos(\Theta) - \frac{2V^2}{\lambda.D_0} sin^2(\Theta)t \qquad (3)$$

Dans laquelle $\lambda$ représente la longueur d'onde.

La bande $B_d$ imagée pendant le temps d'éclairement $T_e$ de l'antenne du radar 10 est donnée par la relation :

$$Bd = \frac{2V^2}{\lambda.D_0} sin^2(\Theta)Te \qquad (4)$$

et la résolution transverse $\Delta R_a$ obtenue par le radar SAR :

$$\Delta R_a = \frac{\lambda.D_0}{2V.T_e.sin(\Theta)} \qquad (5)$$

A partir de L, la longueur de l'antenne SAR équivalente et des relations (4) et (5), on déduit le nombre $N_{dop}$ de répliques à générer sur chaque case distance pour couvrir toute la bande Doppler :

$$N_{dop} = \frac{\lambda D_0}{L.\Delta R_a} = \frac{2V.T_e.sin(\Theta)}{L} \qquad (6)$$

Vu du détecteur de radars, la phase Doppler correspondant à un trajet unique s'écrit à un instant t :

$$\varphi_{dr}(t) = 2\pi\frac{D_0}{\lambda} - 2\pi\frac{V}{\lambda}cos(\Theta)t + 2\pi\frac{V^2}{2\lambda D_0}sin^2(\Theta)\,t^2 \qquad (7)$$

Il est à noter que ceci n'est vrai que si les impulsions radar sont émises à phase constante à chaque récurrence ce qui correspond à la majorité des cas. Dans le cas contraire, il faudrait en plus apprendre la loi de modulation pour la soustraire à la mesure.
La fréquence Doppler correspondant à un trajet unique s'écrit à l'instant t :

$$Fd_{dr}(t) = \frac{V}{\lambda}cos(\Theta) - \frac{V^2}{\lambda D_0}sin^2(\Theta)t \qquad (8)$$

Cette relation peut s'écrire sous une forme classique correspondant à un signal modulé linéairement en fréquence :

$$Fd_{dr}(t) = Fd_{0esm} - \frac{B_d}{2T_e}t \qquad (9)$$

Le signal intercepté par le dispositif antennaire de la fonction détecteur de radars peut s'écrire en bande de base, c'est-à-dire après démodulation par la fréquence porteuse f :

$$r_{dr}(\tau,t) = a(t)Rec_T\left(\tau - \frac{D(t)}{c}\right)e^{-2\pi jf\frac{D(t)}{c}}e^{+2\pi j(\frac{\Delta F}{2T}\left(\tau-\frac{D(t)}{c}\right)^2)} \qquad (10)$$

Où : $\tau$ représente le temps court, c'est-à-dire le temps dans la récurrence, l'origine des temps étant prise en début de récurrence,
t représente le temps long, c'est-à-dire un temps multiple de la durée d'une récurrence : t=k.Tr,
$\Delta F$ représente la bande de modulation du signal radar,
T représente la durée de l'impulsion du radar,
a(t) représente l'amplitude du signal reçu au temps long t,
c représente la vitesse de propagation des ondes.

En appliquant le corrélateur "temps court" estimé précédemment, le module de traitement de l'équipement 12 assurant la fonction de détecteur de radars comprime le signal reçu à chaque récurrence d'indice i, pour en extraire à chaque récurrence un signal comprimé $r_{cdr}(t)$ en fonction du retard de propagation D(t)/c de la forme :

$$r_{cdr}\left(\frac{D(t)}{c},t\right) =$$
$$a(t)e^{-2\pi jf\frac{D(t)}{c}}\int_{-\infty}^{+\infty}Rec_T\left(\tau - \frac{D(t)}{c}\right)e^{+2\pi j(\frac{\Delta F}{2T}\left(\tau-\frac{D(t)}{c}\right)^2)}Rec_T(\tau)e^{-2\pi j\frac{\Delta F}{2T}\tau^2}d\tau$$

$$r_{cdr}\left(\frac{D(t)}{c},t\right) =$$
$$a(t)e^{-2\pi jf\frac{D(t)}{c}}e^{j\pi\frac{\Delta FD^2(t)}{Tc^2}}\int_{-\infty}^{+\infty}Rec_T\left(\tau - \frac{D(t)}{c}\right)Rec_T(\tau)e^{\frac{-2\pi j\Delta FD(t)\tau}{cT}}d\tau$$

Ce qui donne après calcul :

$$r_{cdr}\left(\frac{D(t)}{c},t\right) = a(t)e^{-2\pi j f \frac{D(t)}{Cc}} e^{2\pi j \frac{\Delta F D^2(t)}{Tc^2}} Rec_{2T}(\tau)(T$$
$$-\left|\frac{D(t)}{c}\right|)\frac{\sin\left(\frac{\pi \Delta F D(t)}{cT}(T-\left|\frac{D(t)}{c}\right|)\right)}{\frac{\pi \Delta F D(t)}{cT}(T-\left|\frac{D(t)}{c}\right|)}$$

Si on néglige le terme de phase quadratique en D²(t) on obtient :

$$r_{cdr}\left(\frac{D(t)}{c},t\right) \approx a(t)e^{-2\pi j f \frac{D(t)}{c}} Rec_{2T}(\tau)(T-\left|\frac{D(t)}{c}\right|)\frac{\sin\left(\frac{\pi \Delta F D(t)}{cT}(T-\left|\frac{D(t)}{c}\right|)\right)}{\frac{\pi \Delta F D(t)}{cT}(T-\left|\frac{D(t)}{c}\right|)} \qquad (11)$$

La phase relative à l'effet SAR apparaît dans le terme $e^{-2\pi j f \frac{D(t)}{c}}$ avec, d'après (7) :

$$\varphi_{dr}(t) = 2\pi f \frac{D(t)}{c} = 2\pi \frac{D_0}{\lambda} - 2\pi \frac{V}{\lambda}\cos(\Theta)t + 2\pi \frac{V^2}{2\lambda D_0}\sin^2(\Theta) t^2$$

L'estimation du signal SAR sur le temps long consiste à identifier, dans un corrélateur, la fréquence Doppler initiale $Fd_{odr}$ à l'aide de la relation :

$$Fd_{odr} = \frac{V}{\lambda}\cos(\Theta)$$

et la pente de modulation $\frac{Bd}{2Te}$ du signal modulé en fréquence sur le temps long correspondant à l'effet SAR grâce à la relation :

$$\frac{Bd}{2Te} = \frac{V^2}{\lambda D_0}\sin^2(\Theta).$$

Cette analyse est effectuée sur une durée très inférieure au temps d'éclairement Te du radar à synthèse d'ouverture, par exemple sur 100 ms, et renouvelée de façon récursive au court du temps en considérant à chaque itération une nouvelle origine des temps pour le temps long. Compte tenu de la faible durée utilisée pour effectuer la corrélation, on peut considérer qu'il n'y a pas de migration en distance et que l'amplitude du signal comprimé peut être considérée comme constante pendant ce temps, ainsi :

$$r_{cdr}\left(\frac{D(t)}{c},t\right) \approx Ka(t)e^{-2\pi j f \frac{D(t)}{c}}$$

$$r_{cdr}\left(\frac{D(t)}{c},t\right) \approx Ka(t)e^{-2\pi j(\frac{D_0}{\lambda} - \frac{V}{\lambda}\cos(\Theta)t + \frac{V^2}{2\lambda D_0}\sin^2(\Theta)t^2)} \qquad (12)$$

La corrélation peut être réalisée à l'aide d'une transformée temps-fréquence, comme la transformée de Wigner-Ville par exemple.
En pratique, compte tenu du faible temps d'analyse et de la faible pente de modulation, la fréquence Doppler peut en général être considérée constante pendant l'analyse, et une simple transformée de Fourier permettant de mesurer la fréquence Doppler moyenne $Fd_{dr}$ sur la durée de l'analyse peut être suffisante pour caractériser le signal SAR.

$$Fd_{dr} = \frac{V}{\lambda}cos(\Theta) + \frac{V^2}{2\lambda D_0}sin^2(\Theta)t \approx \frac{V}{\lambda}cos(\Theta)Fd_{0dr}$$

Ceci est équivalent à un traitement d'antenne synthétique non focalisée.

La mesure de la fréquence Doppler moyenne $Fd_{dr}$ permet, ayant estimé la longueur d'onde À et l'angle de direction d'arrivée θ par rapport au détecteur de radars par ailleurs, d'en déduire la vitesse V du porteur. La distance $D_0$ est obtenue en fusionnant les détections des deux détecteurs de radars, par exemple en utilisant la différence des angles d'arrivée ou la différence des temps d'arrivée des impulsions. A partir de l'équation (5) on obtient :

$$\Delta R_a = \frac{\lambda D_0}{2VT_e sin(\Theta)}$$

On peut ainsi en déduire le temps d'intégration SAR $T_e$ et par suite, à l'aide de la relation (4), l'extension de la bande Doppler Bd à brouiller :

$$Bd = \frac{2V^2}{\lambda D_0}sin^2(\Theta)Te$$

D'après l'équation (10), le signal $r_{dr}(\tau,t)$ intercepté par le détecteur de radars peut s'écrire en bande de base, c'est-à-dire après démodulation par la fréquence porteuse f, sous la forme :

$$r_{dr}(\tau,t) = a(t)Rec_T\left(\tau - \frac{D(t)}{c}\right)\underbrace{e^{-2\pi jf\frac{D(t)}{c}}}_{\text{Terme temps long}}\underbrace{e^{+2\pi j(\frac{\Delta F}{2T}(\tau-\frac{D(t)}{c})^2)}}_{\text{Terme temps court}}$$

Soit $\Delta R_d$ la résolution radiale du radar, $\Delta R_a$ sa résolution transversale et $D(t)$ la distance courante du brouilleur utilisé au radar. Si on considère un point donné M' de la surface à protéger, décalé par rapport au brouilleur utilisé d'une distance radiale $x_i = i\Delta R_d$ avec i un entier et d'une distance transversale de $y_j = j\Delta R_a$, avec j un entier, on peut calculer que la distance $D_{i,j}(t)$ de ce point au radar est telle que :

$$D_{i,j}(t) = \sqrt{D(t)^2 + (x_i{}^2 + y_j{}^2) - 2(x_i x_R + y_j y_R)}$$

où $x_R$ et $y_R$ sont respectivement les projections de D(t) sur l'axe radial et sur l'axe transversal.

Le signal de brouillage $r_{bi,j}(\tau,t)$ à générer par le brouilleur pour masquer ce point M' au temps défini par le couple $(t,\tau)$, dans lequel $t=kTr+\tau$, (k représentant un entier, Tr le temps de récurrence et $\tau$ le temps court) est par conséquent donné, en bande de base, par la relation :

$$r_{bi,j}(\tau,t)$$
$$= a_{i,j}(t)Rec_T\left(\tau\right.$$
$$\left. - \frac{D(t) + 2(D_{i,j}(t) - D(t))}{c}\right)e^{-2\pi jf\frac{D(t)+2(D_{i,j}(t)-D(t))}{c}}e^{+2\pi j(\frac{\Delta F}{2T}(\tau-\frac{D(t)+2(D_{i,j}(t)-D(t))}{c})^2)}$$

dans laquelle $a_{i,j}$ est l'amplitude de brouillage désirée.

Si on pose :

$$\Delta\tau_{i,j}(t) = \frac{2D_{i,j}(t)}{c} - \frac{2D(t)}{c} \tag{14}$$

$$r_{bi,j}(\tau,t) = a_{i,j}(t)Rec_T\left(\tau - \frac{D(t)}{c} - \Delta\tau_{i,j}(t)\right)e^{-2\pi jf\left(\frac{D(t)}{c}+\Delta\tau_{i,j}(t)\right)}$$
$$+ e^{+2\pi j\left(\frac{\Delta F}{2T}\left(\tau-\frac{D(t)}{c}-\Delta\tau_{i,j}(t)\right)^2\right)}$$

$$r_{b,i,j}(\tau,t) = \frac{a_{i,j}(t)}{a(t)}r_{esm}\left(\tau - \Delta\tau_{i,j}(t),t\right)e^{-2\pi jf\Delta\tau_{i,j}(t)} \tag{15}$$

A l'instant court $\tau$ de la récurrence t, la fréquence du signal modulé linéairement en fréquence, ou «chirp», est :

$$f_\tau = \frac{\Delta F}{T}\tau.$$

En exprimant la transformée de Fourier sur le temps court et en notant $S_{dr}(f_\tau,t)$ la transformée de Fourier du signal intercepté par le détecteur de radars $r_{dr}(\tau,t)$ et $S_{bi,j}(f_\tau,t)$ la transformée de Fourier du signal de brouillage $r_{b,i,j}(\tau,t)$, on obtient :

$$S_{bi,j}(f_\tau,t) = \frac{a_{i,j}(t)}{a(t)}S_{dr}(f_\tau,t)e^{-2\pi jf_\tau\Delta\tau_{i,j}(t)}e^{-2\pi jf\Delta\tau_{i,j}(t)}$$

Dans le domaine de Fourier, le signal de brouillage à émettre pour couvrir l'ensemble de l'image sur $N_{dist}$ cases distances et $N_{dop}$ cases Doppler s'écrit à l'instant t :

$$SB(f_\tau,t) = \sum_{i=1}^{N_{dist}}\sum_{j=1}^{N_{dop}} S_{bi,j}(f_\tau,t)$$

$$SB(f_\tau,t) = \sum_{i=1}^{N_{dist}}\sum_{j=1}^{N_{dop}}\frac{a_{i,j}(t)}{a(t)}S_{dr}(f_\tau,t)e^{-2\pi jf_\tau\Delta\tau_{i,j}(t)}e^{-2\pi jf\Delta\tau_{i,j}(t)} \tag{16}$$

Suivant un mode de mise en œuvre alternatif du procédé de brouillage, au moins un équipement 12 assurant la fonction de brouilleur de radars comprend une table mémoire ou table de modulation dans laquelle sont préenregistrées différents signaux de brouillage correspondant aux différentes trajectoires possibles du porteur du radar 10 SAR à brouiller. En fonction des caractéristiques du signal radar reçu, cette zone mémoire est adressée pour commander la génération des signaux de brouillage à émettre. La forme des signaux de brouillage à émettre n'est donc pas calculée en temps réel mais choisie parmi des formes précalculées et préenregistrées dans une zone mémoire. De façon avantageuse, le fait de calculer les répliques de brouillage hors temps réel permet de réduire considérablement les moyens de calcul à mettre en œuvre et le temps de traitement.

Une fois les signaux de brouillage calculés, ces derniers sont ensuite émis par le module d'émission du ou des équipements 12 assurant la fonction de brouilleur de radars pendant une étape Etp70. En fonction des résultats du ou des modules de traitement des équipements 12 assurant la fonction de détecteur de radars et selon le sens de défilement du radar 10 à synthèse d'ouverture, l'équipement 12 assurant la fonction de brouilleur de radars le plus proche angulairement dudit radar 10 sera activé. Ce brouillage est effectué en pointant le lobe principal 17 de l'antenne d'émission de brouillage dans la direction du radar 10 avant que ce dernier ne soit en situation d'éclairer la zone à protéger, et pendant tout le temps où il l'éclaire comme illustré sur la figure 1b. Pour cela, les équipements 12 assurant la fonction de brouilleurs peuvent être munis d'une antenne directive, typiquement de quelques degrés d'ouverture. Cette antenne peut par exemple être maintenue pointée dans la direction du radar à synthèse d'ouverture à brouiller par asservissement mécanique.

L'opération d'estimation des répliques à émettre peut être répétée périodiquement afin d'optimiser en permanence l'efficacité du brouillage.

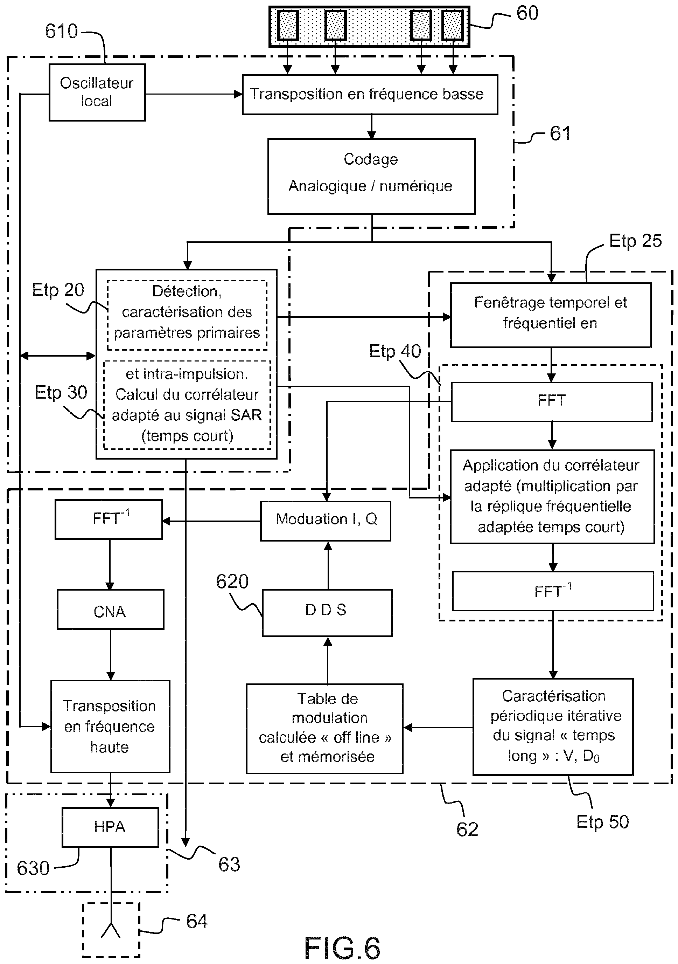

La figure 6 illustre un exemple de mode de mise en œuvre de l'invention. Dans ce mode préféré, chaque équipement 12 assure les fonctions de détecteur de radars et de brouilleur de radar et sont configurés pour fonctionner dans la bande X. Chaque équipement 12 comprend un module 61 de réception et de traitement configuré pour analyser les signaux reçus par le dispositif antennaire 60 de la fonction détection de radars. Chaque équipement 12 comprend également un module 62 de génération de brouillage configuré pour générer les signaux de brouillage à émettre par le module d'émission 63 de brouillage et l'antenne d'émission de brouillage 64.

Les récepteurs des fonctions détecteur de radars sont du type superhétérodyne à interférométrie et les modules de génération de brouillage 62 utilisent des systèmes à mémoire de fréquence radio numérique ou DRFM. Les équipements 12 sont munis d'un dispositif antennaire 60 pour interférométrie à large champ, typiquement de l'ordre de 90°, orientable mécaniquement. Les équipements sont synchronisés par une horloge GPS et communiquent via au moins une liaison de données 18 bidirectionnelle sécurisée.

Dans ce mode préféré, les émissions radar reçues sur le dispositif antennaire 60 de la fonction détection de radar sont transposées en fréquence basse à l'aide d'un oscillateur local 610 afin de faciliter leur traitement puis sont numérisés par l'intermédiaire d'un convertisseur analogique/numérique.

La détection des caractères primaires de l'impulsion est ensuite effectuée. A partir de ces caractéristiques, on calcule le corrélateur qui sera adapté au signal SAR à chaque récurrence.

A partir des signaux reçus, on établit également un fenêtrage temporel et fréquentiel en réception afin de limiter le volume de détection et éliminer les signaux en dehors de l'intervalle utile correspondant aux caractéristiques observées sur le signal radar.

Les signaux reçus subissent ensuite une compression d'impulsion sur le temps court. Pour cela, une transformation pour passer du domaine temporel au domaine fréquentiel est d'abord appliquée par l'intermédiaire d'une transformée de Fourier rapide. Le signal résultant est alors traité par un corrélateur adapté et le signal ainsi obtenu est ensuite de nouveau transformé pour passer du domaine fréquentiel au domaine temporel par l'intermédiaire d'une transformée de Fourier inverse. Au final, on obtient une impulsion comprimée qui servira à établir, de récurrence en récurrence, la vitesse de déplacement du porteur et la distance entre ce porteur et la surface à protéger. Ces paramètres vont permettre d'adresser la table de modulation afin de commander la génération numérique des échantillons de phase correspondant aux signaux de brouillage par un synthétiseur numérique de signal 620 ou DDS pour « *Direct Digital Synthesizer* » selon la terminologie anglo-saxonne.

Les échantillons de phase issus du synthétiseur numérique de signal sont utilisés pour moduler le signal reçu qui a été préalablement transposé en fréquences basses et transformé du domaine temporel au domaine fréquentiel. Le signal résultant est ensuite transformé au domaine temporel, à l'aide d'une fonction de transformée de Fourier inverse, puis converti en analogique à l'aide d'un convertisseur numérique-analogique. Le signal est ensuite transposé en haute fréquence de façon à le ramener à la fréquence du radar, sur sa fréquence porteuse d'origine. Le signal est enfin amplifié par un amplificateur de grande puissance 630 (ou HPA pour « *High Power Amplifier* » selon la terminologie anglo-saxonne) avant d'être transmis par l'antenne d'émission de brouillage 64.

Les différents modules de réception, de traitement, de génération de brouillage et d'émission peuvent comprendre un ou plusieurs microprocesseurs, processeurs, ordinateurs ou tous autres moyens équivalents programmés de façon opportune.

## Revendications

**1.** Procédé de brouillage d'au moins un radar (10) aéroporté de type SAR mis en œuvre par un dispositif de brouillage de radars comprenant un groupe d'au moins deux équipements (12) coopératifs entourant une surface (11) au sol (51) à protéger, au moins deux équipements (12) dudit groupe assurant une fonction de détecteur de radars et au moins un équipement dudit groupe assurant une fonction de brouilleur de radars, chaque équipement (12) assurant la fonction de détecteur de radars comprenant un module de réception et de traitement configuré pour analyser les signaux reçus, chaque équipement (12) assurant la fonction de brouilleur de radars étant configuré pour générer et émettre des signaux de brouillage, chaque équipement (12) étant relié entre eux par au moins une liaison de donnée (18) bidirectionnelle et étant synchronisé par une horloge commune, ledit procédé étant **caractérisé en ce qu'**il comprend une étape (Etp10) d'identification des signaux reçus par les récepteurs et si lesdits signaux reçus correspondent à des signaux d'un radar à ouverture synthétique :

- une étape (Etp20) de caractérisation du signal SAR reçu sur une durée prédéterminée inférieure à la durée d'une récurrence du signal SAR,
- une étape (Etp30) de calcul d'un filtre adapté aux impulsions du signal SAR reçu,
- une étape (Etp40) de compression d'impulsion du signal SAR reçu à chaque récurrence à l'aide dudit filtre adapté, permettant d'obtenir la phase dans les cases distance, ce qui permet d'obtenir l'historique Doppler lié au déplacement du porteur du radar,

- une étape (Etp50) de caractérisation périodique itérative du signal reçu sur une durée prédéterminée supérieure à une récurrence du signal SAR de façon à établir, de récurrence en récurrence, la vitesse de déplacement du radar et la distance entre ledit radar et la surface (11) à protéger,

- une étape (Etp60) de calcul des signaux de brouillage à émettre pour chaque point de la surface (11) à protéger afin de brouiller le radar SAR de façon cohérente sur l'axe distance et sur l'axe Doppler.

- une étape (Etp70) d'émission des signaux de brouillage calculés.

2. Procédé selon la revendication précédente dans lequel le procédé comprend une étape (Etp25) de fenêtrage temporel et fréquentiel de façon à limiter le volume de détection du module de traitement à une fenêtre temporelle et à une bande passante correspondant aux caractéristiques observées sur le signal SAR.

3. Procédé selon une des revendications précédentes dans lequel l'identification d'un signal SAR est obtenue à partir de critères prédéterminés relatifs à sa forme d'onde et à l'orientation du faisceau d'antenne du radar SAR.

4. Procédé selon une des revendications précédentes dans lequel au moins un équipement (12) assurant la fonction de brouilleur de radars comprend une table mémoire dans laquelle sont préenregistrées différents signaux de brouillage et dans lequel les signaux de brouillage à émettre ne sont pas calculés mais chargés à partir de la zone mémoire.

5. Procédé selon une des revendications précédentes dans lequel les paramètres des signaux de brouillage sont modifiés au cours d'une même séquence de brouillage de façon à modifier la surface (11) à protéger.

6. Dispositif de brouillage de radars aéroporté de type SAR configuré pour mettre en œuvre le procédé de brouillage selon une des revendications précédentes, ledit dispositif étant **caractérisé en ce qu'**il comprend un groupe d'au moins deux équipements (12) coopératifs entourant une surface (11) au sol à protéger, au moins deux équipements (12) dudit groupe assurant une fonction de détecteur de radars et au moins un équipement dudit groupe assurant une fonction de brouilleur de radars, chaque équipement (12) assurant la fonction de détecteur de radars comprenant un module de réception et de traitement configuré pour analyser les signaux reçus, chaque équipement (12) assurant la fonction de brouilleur de radars étant configuré pour générer et émettre des signaux de brouillage, chaque équipement (12) étant relié entre eux par une liaison de donnée (18) bidirectionnelle et étant synchronisé par une horloge commune.

7. Dispositif selon la revendication précédente dans lequel chaque équipement (12) assure la fonction de brouilleur de radars.

8. Dispositif selon une des revendications 6 ou 7 dans lequel le module d'émission de chaque équipement assurant la fonction de brouilleur de radars comprend une antenne mobile configurée pour rester pointée dans la direction du radar SAR à brouiller.

9. Dispositif selon une des revendications 6 à 8 dans lequel le module de réception des équipements assurant la fonction de détecteur de radars comprend un récepteur du type superhétérodyne.

10. Dispositif selon une des revendications 6 à 9 dans lequel chaque équipement assurant la fonction de détecteur de radars comprend une antenne (60) d'interférométrie.

11. Dispositif selon une des revendications 6 à 10 dans lequel au moins un détecteur de radars comprend une table mémoire dans laquelle sont préenregistrés différents signaux de brouillage.

12. Dispositif selon une des revendications 6 à 11 dans lequel l'horloge de synchronisation est une horloge GPS.

13. Dispositif selon une des revendications 6 à 12 dans lequel au moins une liaison de données (18) est une liaison de données sécurisée.

14. Dispositif selon une des revendications 6 à 13 dans lequel au moins un élément du groupe d'au moins deux équipements (12) est mobile.

**Patentansprüche**

1.  Verfahren zum Stören von mindestens einem luftgestützten Radar (10) vom Typ SAR, umgesetzt durch eine Radarstörvorrichtung, umfassend eine Gruppe aus mindestens zwei zusammenarbeitenden Ausrüstungen (12), welche eine zu schützende Fläche (11) am Boden (51) umschließen, wobei mindestens zwei Ausrüstungen (12) der Gruppe eine Radardetektorfunktion gewährleisten und mindestens eine Ausrüstung der Gruppe eine Radarstörfunktion gewährleistet, wobei jede Ausrüstung (12), welche die Radardetektorfunktion gewährleistet, ein Empfangs- und Verarbeitungsmodul umfasst, welches konfiguriert ist, um die empfangenen Signale zu analysieren, wobei jede Ausrüstung (12), welche die Radarstörfunktion gewährleistet, konfiguriert ist, um Störsignale zu erzeugen und auszusenden, wobei jede Ausrüstung (12) miteinander über mindestens eine bidirektionale Datenleitung (18) verbunden und durch eine gemeinsame Uhr synchronisiert ist, wobei das Verfahren **dadurch gekennzeichnet ist, dass** es einen Schritt (Etp10) der Identifizierung der durch die Empfänger empfangenen Signale umfasst, und wenn die empfangenen Signale Signalen eines Radars mit synthetischer Öffnung entsprechen:

    - einen Schritt (Etp20) des Charakterisierens des empfangenen SAR-Signals über eine vorbestimmte Dauer, welche die Dauer bis zur Wiederkehr des SAR-Signals unterschreitet,
    - einen Schritt (Etp30) des Berechnens eines für die Impulse des empfangenen SAR-Signals geeigneten Filters,
    - einen Schritt (Etp40) der Impulskompression des empfangenen SAR-Signals bei jeder Wiederkehr mithilfe des geeigneten Filters, welcher es ermöglicht, die Phase in den Entfernungs-Feldern zu erzielen, was es ermöglicht, die mit der Bewegung des Radarträgers verbundene Doppler-Historie zu erzielen,
    - einen Schritt (Etp50) des periodischen, wiederholten Charakterisierens des empfangenen Signals über eine vorbestimmte Dauer, welche eine Wiederkehr des SAR-Signals überschreitet, um von Wiederkehr zu Wiederkehr die Bewegungsgeschwindigkeit des Radars und die Entfernung zwischen dem Radar und der zu schützenden Fläche (11) zu ermitteln,
    - einen Schritt (Etp60) des Berechnens der auszusendenden Störsignale für jeden Punkt der zu schützenden Fläche (11), um den SAR-Radar kohärent auf der Entfernungs- und der Doppler-Achse zu stören,
    - einen Schritt (Etp70) des Aussendens der berechneten Störsignale.

2.  Verfahren nach dem vorhergehenden Anspruch, wobei das Verfahren einen Schritt (Etp25) des Zeit- und Frequenzfensterns zur Begrenzung des Detektionsvolumens des Verarbeitungsmoduls auf ein Zeitfenster und auf ein Passband umfasst, welche den am SAR-Signal beobachteten Merkmalen entsprechen.

3.  Verfahren nach einem der vorhergehenden Ansprüche, wobei die Identifizierung eines SAR-Signals anhand von vorbestimmten Kriterien in Bezug auf seine Wellenform und die Ausrichtung des Antennenstrahls des SAR-Radars erzielt wird.

4.  Verfahren nach einem der vorhergehenden Ansprüche, wobei mindestens eine Ausrüstung (12), welche die Radarstörfunktion gewährleistet, eine Speichertabelle umfasst, in welcher unterschiedliche Störsignale vorgespeichert sind, und wobei die auszusendenden Störsignale nicht berechnet, sondern aus dem Speicherbereich geladen werden.

5.  Verfahren nach einem der vorhergehenden Ansprüche, wobei die Parameter der Störsignale im Zuge einer gleichen Störsequenz so modifiziert werden, dass die zu schützende Fläche (11) modifiziert wird.

6.  Vorrichtung zum Stören von luftgestützten Radaren vom Typ SAR, konfiguriert zur Umsetzung des Störverfahrens nach einem der vorhergehenden Ansprüche, wobei die Vorrichtung **dadurch gekennzeichnet ist, dass** sie eine Gruppe aus mindestens zwei zusammenarbeitenden Ausrüstungen (12) umfasst, welche eine zu schützende Fläche (11) am Boden umgreifen, wobei mindestens zwei Ausrüstungen (12) der Gruppe eine Radardetektorfunktion gewährleisten und mindestens eine Ausrüstung der Gruppe eine Radarstörfunktion gewährleistet, wobei jede Ausrüstung (12), welche die Radardetektorfunktion gewährleistet, ein Empfangs- und Verarbeitungsmodul umfasst, welches konfiguriert ist, um die empfangenen Signale zu analysieren, wobei jede Ausrüstung (12), welche die Radarstörfunktion gewährleistet, konfiguriert ist, um Störsignale zu erzeugen und auszusenden, wobei jede Ausrüstung (12) miteinander über mindestens eine bidirektionale Datenleitung (18) verbunden und durch eine gemeinsame Uhr synchronisiert ist.

7.  Vorrichtung nach dem vorhergehenden Anspruch, wobei jede Ausrüstung (12) die Radarstörfunktion gewährleistet.

8.  Vorrichtung nach einem der Ansprüche 6 oder 7, wobei das Sendemodul einer jeden die Radarstörfunktion gewährleistenden Ausrüstung eine mobile Antenne umfasst, welche konfiguriert ist, um in die Richtung des zu störenden SAR-Radars gerichtet zu bleiben.

9. Vorrichtung nach einem der Ansprüche 6 bis 8, wobei das Empfangsmodul der die Radardetekorfunktion gewährleistenden Ausrüstungen einen Empfänger vom Typ superheterodyn umfasst.

10. Vorrichtung nach einem der Ansprüche 6 bis 9, wobei jede die Radardetekorfunktion gewährleistende Ausrüstung eine Interferometrieantenne (60) umfasst.

11. Vorrichtung nach einem der Ansprüche 6 bis 10, wobei mindestens ein Radardetektor eine Speichertabelle umfasst, in welcher unterschiedliche Störsignale vorgespeichert sind.

12. Vorrichtung nach einem der Ansprüche 6 bis 11, wobei die Synchronisationsuhr eine GPS-Uhr ist.

13. Vorrichtung nach einem der Ansprüche 6 bis 12, wobei mindestens eine Datenleitung (18) eine abgesicherte Datenleitung ist.

14. Vorrichtung nach einem der Ansprüche 6 bis 13, wobei mindestens ein Element der Gruppe von mindestens zwei Ausrüstungen (12) mobil ist.

**Claims**

1. A method for jamming at least one SAR-type airborne radar (10) implemented by a radar-jamming device comprising a group of at least two cooperating units (12) surrounding an area (11) on the ground (51) to be protected, at least two units (12) of said group providing a radar-detection function and at least one unit of said group providing a radar-jamming function, each unit (12) providing the radar-detection function comprising a receiving and processing module configured to analyze the received signals, each unit (12) providing the radar-jamming function being configured to generate and to transmit jamming signals, each unit (12) being interlinked by at least one two-way data link (18) and being synchronized by a common clock, said method being **characterized in that** it comprises a step (Etp10) of identifying the signals received by the receivers and if said received signals correspond to synthetic aperture radar signals:

    - a step (Etp20) of characterizing the received SAR signal over a predetermined duration that is shorter than the duration of a recurrence of the SAR signal;
    - a step (Etp30) of computing a filter adapted to the pulses of the received SAR signal;
    - a step (Etp40) of carrying out pulse compression of the received SAR signal on each recurrence using said adapted filter, making it possible to obtain the phase in the distance boxes, thereby making it possible to obtain the Doppler history linked to the movement of the radar carrier;
    - a step (Etp50) of iteratively periodically characterizing the received signal over a predetermined duration that is longer than a recurrence of the SAR signal so as to establish, from one recurrence to the next, the speed of movement of the radar and the distance between said radar and the area (11) to be protected;
    - a step (Etp60) of computing the jamming signals to be emitted for each point of the area (11) to be protected so as to jam the SAR radar coherently on the distance axis and on the Doppler axis;
    - a step (Etp70) of emitting the computed jamming signals.

2. The method according to the preceding claim, wherein the method comprises a step (Etp25) of time and frequency windowing so as to limit the detection volume of the processing module to a time window and to a bandwidth corresponding to the characteristics observed on the SAR signal.

3. The method according to one of the preceding claims, wherein a SAR signal is identified on the basis of predetermined criteria relating to its waveform and to the orientation of the antenna beam of the SAR radar.

4. The method according to one of the preceding claims, wherein at least one unit (12) providing the radar-jamming function comprises a memory table in which various jamming signals are pre-recorded and wherein the jamming signals to be emitted are not computed but loaded from the memory zone.

5. The method according to one of the preceding claims, wherein the parameters of the jamming signals are modified over the course of one and the same jamming sequence so as to modify the area (11) to be protected.

6.  A device for jamming SAR-type airborne radars that is configured to implement the jamming method according to one of the preceding claims, said device being **characterized in that** it comprises a group of at least two cooperating units (12) surrounding an area (11) on the ground to be protected, at least two units (12) of said group providing a radar-detection function and at least one unit of said group providing a radar-jamming function, each unit (12) providing the radar-detection function comprising a receiving and processing module configured to analyze the received signals, each unit (12) providing the radar-jamming function being configured to generate and to emit jamming signals, each unit (12) being interlinked by a two-way data link (18) and being synchronized by a common clock.

7.  The device according to the preceding claim, wherein each unit (12) provides the radar-jamming function.

8.  The according to either of claims 6 or 7, wherein the emitter module of each unit providing the radar-jamming function comprises a movable antenna configured to stay pointed in the direction of the SAR radar to be jammed.

9.  The device according to one of claims 6 to 8, wherein the receiver module of the units providing the radar-detection function comprises a superheterodyne-type receiver.

10. The device according to one of claims 6 to 9, wherein each unit providing the radar-detection function comprises an interferometry antenna (60).

11. The device according to one of claims 6 to 10, wherein at least one radar detector comprises a memory table in which various jamming signals are pre-recorded.

12. The device according to one of claims 6 to 11, wherein the synchronization clock is a GPS clock.

13. The device according to one of claims 6 to 12, wherein at least one data link (18) is a secure data link.

14. The device according to one of claims 6 to 13, wherein at least one element of the group of at least two units (12) is mobile.

Lobe du détecteur
de radars
15

16

Brouilleur/Détecteur
de radars 2
12

18

11

12

Brouilleur/Détecteur
de radars 1

13

Radar
en défilement
10

14

FIG.1a

16

Brouilleur/Détecteur
de radars 2
12

Lobe Radar
14

Radar en défilement
10

13

18

11

Lobe de brouillage
17

12
Brouilleur/Détecteur
de radars 1

FIG.1b

Direction de déplacement du radar
13

Brouilleur/Détecteur
de radar 1
12

Zone à protéger 11

Brouilleur/Détecteur
12 de radar 2

Diagramme
de rayonnement
de l'antenne SAR
21

14

Marge de
Sensibilité
nécessaire

FIG.2

FIG.3

FIG.5

A  Impulsions radar émises par le SAR

41

410    Tr

t

A  Impulsions radar reçues par le détecteur de radars

42

420

t

A  Fenêtres d'écoute du détecteur de radars après détection
et analyse du signal SAR

43

430

t

A  Spectre du signal SAR

44

440

f

A  Bande de réception du détecteur de radars
avant détection

45

450

f

A  Bande de réception du détecteur de radars
après détection

46

460

f

# FIG.4

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 103760532 B

**Littérature non-brevet citée dans la description**

- **BO ZHAO et al.** Deception Jamming for Squint SAR Based on Multiple Receivers. *IEEE JOURNAL OF SELECTED TOPICS IN APPLIED EARTH OBSER-VATIONS AND REMOTE SENSING,* Août 2015, vol. 8 (8